# EUROPEAN PATENT APPLICATION

(11) **EP 4 557 837 A1**
(43) Date of publication of application: **21.05.2025**
(21) Application number: 23851203.2
(22) Date of filing: 01.03.2023
(51) Int. Cl.: H04W 52/02

(54) **BASE STATION ENERGY-SAVING METHOD, ELECTRONIC DEVICE AND STORAGE MEDIUM**

(30) Priority: 08.08.2022 CN 202210943405
(71) Applicant: ZTE CORPORATION, Shenzhen, Guangdong 518057 (CN)
(72) Inventor: LIU, Zhuang, Shenzhen, Guangdong 518057 (CN); GAO, Yin, Shenzhen, Guangdong 518057 (CN); LI, Dapeng, Shenzhen, Guangdong 518057 (CN); ZHANG, Man, Shenzhen, Guangdong 518057 (CN)
(74) Representative: Canzler & Bergmeier Patentanwälte Partnerschaft mbB
(86) International application number: PCT/CN2023/078918
(87) International publication number: WO 2024/031967

(57) **Abstract**

Provided in the present disclosure are a base station energy-saving method, an electronic device and a storage medium. The method comprises: determining whether there is a cell needing adjustment of the energy-saving state amongst at least one cell of a current base station, the at least one cell of the current base station supporting at least one energy-saving state, and in different energy-saving states, the energy consumption of the same cell being different; and when there is a cell needing adjustment of the energy-saving state, adjusting the energy-saving state of said cell.

## Description

### CROSS-REFERENCE TO RELATED APPLICATIONS

The present disclosure claims the priority of Chinese Patent Application No. 202210943405.3, filed on August 8, 2022, the contents of which are incorporated herein in their entirety by reference.

### TECHNICAL FIELD

The present disclosure relates to the field of communications, and in particular, to a base station energy-saving method, an electronic device, and a computer-readable storage medium.

### BACKGROUND

In order to cope with a dramatic increase in data traffic on mobile communication networks, a goal for designing communication networks (e.g., 5G communication networks) is to facilitate a denser network deployment to cope with the increase in traffic, while the denser network (base station) deployment means higher energy expenditure. In a typical radio access network, base stations consume most of energy in the network. Furthermore, as more base stations with massive multiple-input multiple-output (MIMO) are deployed in the networks, energy efficiency of the networks becomes more urgent and challenging.

Energy consumption is a major part of operational expense (OPEX) of telecom operators. The telecom operators, on one hand, expect to expand market share, and on the other hand, expect to reduce the energy consumption of vast networks, so as to reduce operating costs. Energy efficiency of communication networks is also an important research topic of 3GPP. Under a non-peak condition, shutting down cells with relatively low loads is a widely used strategy to reduce the energy consumption of the networks. To improve the energy efficiency of the radio access network, it is important to consider how to reduce the energy consumption of the network without affecting customer satisfaction degree (e.g., avoiding drop calls and degradation of Quality of Service (QoS)) during an operation process of the network.

An energy-saving technology adopted presently by the typical radio access network is to adopt a wide-coverage base station to provide a basic cell coverage, and deploy more hotspot coverage base stations in the cell coverage of the wide-coverage base station for improving network capacity, and the hotspot base stations can shut down or restart a part of cells of the hotspot base stations as desired.

However, the above manner for reducing the energy consumption of base stations may lead to a reduction of user satisfaction degree.

### SUMMARY

In a first aspect of the present disclosure, there is provided a base station energy-saving method, including: determining whether there is a cell with an energy-saving state to be adjusted in at least one cell of a current base station, the at least one cell of the current base station supporting at least one energy-saving state, and an energy consumption of any cell being different under different energy-saving states; in response to that there is the cell with the energy-saving state to be adjusted, adjusting the energy-saving state of the cell with the energy-saving state to be adjusted.

In a second aspect of the present disclosure, there is provided an electronic device, including: a memory having a computer executable program stored thereon; at least one processor, the computer executable program, invoked by the at least one processor, causes the at least one processor to implement the base station energy-saving method described above.

In a third aspect of the present disclosure, there is provided a computer-readable storage medium having a computer executable program stored thereon, the computer executable program, invoked by a processor, causes the processor to implement the base station energy-saving method described above.

### BRIEF DESCRIPTION OF DRAWINGS

Fig. 1 is a schematic diagram of implementing energy-saving at a base station by shutting down a cell in the related art.
Fig. 2 is a flowchart of an implementation of a base station energy-saving method according to the present disclosure.
Fig. 3 is a flowchart of an implementation of operation S120 in a base station energy-saving method according to the present disclosure.
Fig. 4 is a flowchart of an implementation of operation S120 in a base station energy-saving method according to the present disclosure.
Fig. 5 is a flowchart of other operations in a base station energy-saving method according to the present disclosure.
Fig. 6 is a flowchart of an implementation of a base station energy-saving method according to the present disclosure.
Fig. 7 is a flowchart of an implementation of a base station energy-saving method according to the present disclosure.
Fig. 8 is a schematic diagram of an implementation of notifying energy-saving support information mutually between base stations in a base station energy-saving method according to the present disclosure.
Fig. 9 is a schematic diagram of an implementation of notifying energy-saving support information mutually between base stations in a base station energy-saving method according to the present disclosure.
Fig. 10 is a schematic diagram of an implementation of notifying energy-saving assistance information mutually between base stations in a base station energy-saving method according to the present disclosure.
Fig. 11 is a schematic diagram of an implementation of notifying energy-saving assistance information mutually between base stations in a base station energy-saving method according to the present disclosure.
Fig. 12 is a schematic diagram of a cell handover flow in a base station energy-saving method according to the present disclosure.
Fig. 13 is a schematic flowchart after receiving a cell handover request in a base station energy-saving method according to the present disclosure.
Fig. 14 is a schematic diagram of signaling interaction in an example 1 according to the present disclosure.
Fig. 15 is a schematic diagram of signaling interaction in an example 2 according to the present disclosure.
Fig. 16 is a schematic diagram of signaling interaction in an example 3 according to the present disclosure.

### DETAIL DESCRIPTION OF EMBODIMENTS

In order to make those skilled in the art better understand the technical solutions of the present disclosure, a base station energy-saving method, an electronic device, and a computer-readable storage medium, provided in the present disclosure, are described in detail below with reference to the accompanying drawings.

Exemplary embodiments are described in detail below with reference to the accompanying drawings, but the exemplary embodiments may be embodied in different forms, and the present disclosure should not be construed as limited to the embodiments set forth herein. The embodiments are provided to make the present disclosure more thorough and complete, and for those skilled in the art more fully understanding the scope of the present disclosure.

The embodiments of the present disclosure and the technical features in the embodiments may be combined with each other if no conflict is incurred.

As used in the present disclosure, a term "and/or" includes any and all combinations of at least one of listed items.

The terms used in the present disclosure are for a purpose of describing particular embodiments only, and are not intended to limit the present disclosure. As used in the present disclosure, singular forms "a" and "the" include plural forms as well, i.e., to indicate at least one, unless the context clearly defines otherwise. It should further be understood that terms "include/comprise" and/or "made of/consisted of" in the present disclosure are used to specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are the same as meanings commonly understood by one of ordinary skills in the art. It should further be understood that terms, such as those defined in common dictionaries, should be construed as having a meaning that is consistent with that in background of the existing art and the present disclosure, and should not be construed as having an idealized or over-formal meaning, unless expressly defined in the present disclosure.

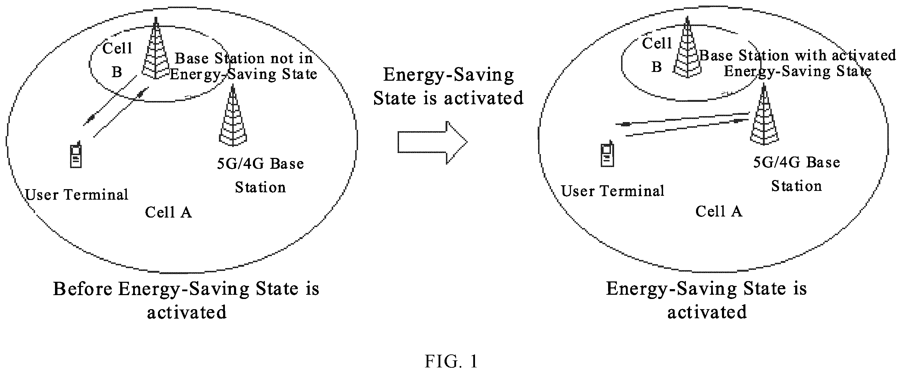

In the related art, energy-saving at a base station is implemented by shutting down a cell. As a case, a capacity booster cell of a 5G base station (next-generation Node B, gNB) is completely covered by a coverage providing cell, and the coverage providing cell is provided by another gNB or a 4G base station (evolved Node B, eNB). In Fig. 1, a cell A is deployed for providing an area with a continuous coverage (e.g., wide coverage), and a cell B is provided for only a special area (e.g., hotspot area) for expanding capacity. In response to detecting that a load in the cell B is relatively low, an energy-saving operation of the cell B may be triggered to shut down the cell B, so that he cell B enters an energy-saving sleep state, and if some users being served exist in the cell B, only after an handover operation of transferring traffic of the users being served to the cell A or other adjacent cells is completed, the cell B is to be shut down; in response to that the traffic of the users in the hotspot area returns to a relatively high level (e.g., as measured by the wide coverage or coverage providing cell A), the cell B may be reactivated, i.e., the cell B is restarted. In the present disclosure, the term "user" means "user terminal" or "user equipment".

As above, if there are a few of users being served in a cell to be shut down, before the cell is shut down, the few of users are to be handed over to other cells. This affects users' experiences. In addition, after the cell is shut down, a new blind area in coverage may be caused, which may result in that some users cannot be connected to any cell, or the quality of service provided to the users may be deteriorated.

Therefore, the base station energy-saving method provided in the related art is suitable for a cell without any load, and is not suitable for a cell with a medium load or relatively low load.

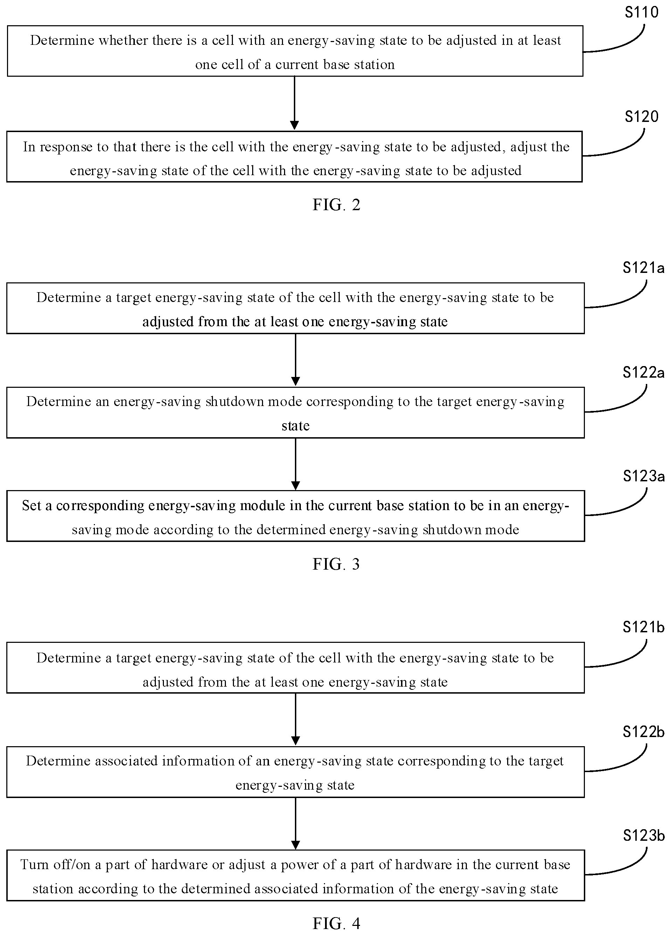

Therefore, in a first aspect of the present disclosure, there is provided a base station energy-saving method, and Fig. 2 is a flowchart of an implementation of the base station energy-saving method according to the present disclosure, as shown in Fig. 2, the base station energy-saving method includes following operations S110 and S 120.

At operation S110, determining whether there is a cell with an energy-saving state to be adjusted in at least one cell of a current base station, at least one cell of the current base station supports at least one energy-saving state, and an energy consumption of any cell is different under different energy-saving states.

At operation S120, in response to that there is the cell with the energy-saving state to be adjusted, adjusting the energy-saving state of the cell with the energy-saving state to be adjusted.

It should be noted that "at least one energy-saving state" includes "one energy-saving state" or "multiple energy-saving states", and "at least one cell of the current base station supports at least one energy-saving state" may include that: one cell of the current base station supports at least one energy-saving state; multiple cells (not all cells) of the current base station support at least one energy-saving state; or all cells of the current base station support at least one energy-saving state.

In the present disclosure, how to adjust the energy-saving state of the cell is not particularly limited. For example, the at least one energy-saving state may correspond to at least one energy-saving shutdown mode one to one, and in different energy-saving shutdown modes, energy-saving modules in energy-saving states in the current base station are different.

Fig. 3 is a flowchart of an implementation of operation S120 of the base station energy-saving method according to the present disclosure, as shown in Fig. 3, the adjusting the energy-saving state of the cell with the energy-saving state to be adjusted (operation S120) may include at least one of following sub-operations S121a to S123a.

At operation S121a, determining a target energy-saving state of the cell with the energy-saving state to be adjusted from the at least one energy-saving state.

At operation S122a, determining an energy-saving shutdown mode corresponding to the target energy-saving state.

At operation S123a, setting a corresponding energy-saving module in the current base station to be in an energy-saving state according to the determined energy-saving shutdown mode.

In the implementation of the base station energy-saving method provided in the present disclosure, the at least one energy-saving state of the cell may further correspond to associated information of the at least one energy-saving state one to one. **In** the present disclosure, one piece of associated information of one energy-saving state of a cell may be capacity information and/or energy efficiency information and/or coverage information of the cell in the energy-saving state. During selecting the energy-saving state of the cell, the associated information in the energy-saving state may be selected. Fig. 4 is a flowchart of an implementation of operation S120 of the base station energy-saving method according to the present disclosure, as shown in Fig. 4, the adjusting the energy-saving state of the cell with the energy-saving state to be adjusted (operation S 120) may include at least one of following sub-operations S121b to S123b.

At operation S121b, determining a target energy-saving state of the cell with the energy-saving state to be adjusted from the at least one energy-saving state.

At operation S122b, determining associated information of the energy-saving state corresponding to the target energy-saving state.

At operation S123b, turning off/on a part of hardware or adjusting a power of a part of hardware in the current base station according to the determined associated information of the energy-saving state.

In operation S123b, the part of hardware is turned on/off or the power of the part of the hardware is adjusted to achieve a cell capacity and/or a cell energy efficiency and/or a cell coverage range determined by the associated information of the energy-saving state, so as to achieve an energy-saving effect. A range of turning on/off the hardware, a range of adjusting the power of the hardware and a magnitude of the power to be adjusted all belong to implementations of a product, and are not specifically limited by the present disclosure.

In the present disclosure, the energy-saving shutdown mode is not particularly limited, as long as a corresponding hardware device can be shut down through the corresponding energy-saving shutdown mode to achieve energy-saving. As an implementation, each energy-saving shutdown mode may be selected from one of following modes: a channel shutdown mode in which a part of channels of an antenna of a base station are turned off; a carrier shutdown mode in which a part of carrier frequencies are turned off, and in an implementation, the carrier frequency shut down is a carrier frequency for capacity increasing; a symbol shutdown mode in which a power supply of a power amplifier (PA) related to a part of symbols is turned off or the PA related to a part of symbols stops transmitting data; a cell full-shutdown mode in which modules corresponding to a cell are all turned off.

The channel shutdown mode is particularly suitable for base stations employing massive MIMO antennas, e.g. for 5G massive antennas, a 64-channel antenna being a main model. For the 64-channel antenna, in response to that 16 channels, 32 channels or 48 channels are shut down, the energy consumption of the cell is different, i.e., the cell is in different energy-saving states. Therefore, the energy-saving state of the cell can be adjusted by adjusting the number of channels of the antenna of the base station.

The carrier shutdown mode is particularly suitable for a networking scene with a multi carrier coverage. In the networking scene with the multi carrier coverage, one carrier is used for implementing a basic coverage, and at least one another carrier is used for implementing capacity increasing. Under two different states of the carrier frequency for capacity increasing being turned on and off, the energy consumption of the cell is different, i.e., the cell is in different energy-saving states. Therefore, the energy-saving state of the cell can be adjusted by adjusting the on or off state of the carrier frequency for capacity increasing.

It should be noted that, in an actual communication process, the base station is not in a maximum traffic state at any time, and accordingly, for a symbol in a sub-frame, it is not filled with valid information at any moment. During transmitting data, the PA is turned on (i.e., the power supply of the PA is turned on), and in on state and in off state (i.e., the power supply of the PA is turned off) of the PA, the energy consumption of the cell is different. At a moment of a symbol period without data transmitting, the PA may be turned off, or stops data transmitting, and at a moment of a symbol period with data transmitting, the PA may be turned on, so that the energy consumption can be reduced, and a normal operation of communication can be ensured. Therefore, the energy-saving state of the cell can be adjusted by adjusting the on or off state of the PA or the state of the PA for transmitting data.

In the present disclosure, how to determine whether there is a cell with an energy-saving state to be adjusted in at least one cell of the current base station is not particularly limited.

As an implementation, the determining whether there is a cell with an energy-saving state to be adjusted in at least one cell of the current base station includes: determining whether there is the cell with the energy-saving state to be adjusted according to an operation state of at least one cell of the current base station.

That is, the current base station can determine whether there is the cell with the energy-saving state to be adjusted in the current base station. In the present disclosure, the operation state of the cell may include at least one of: a load of the cell; a predicted load of the cell; a physical resource block (PRB) usage amount of the cell; or an energy consumption of the cell.

It should be noted that, the larger the load of the cell is, the more the number of modules to be turned on by the cell is, the higher the result energy consumption is, in such case, the energy-saving state of the cell is to be adjusted to a state with a higher energy consumption, and the less the load of the cell is, the fewer the number of modules to be turned on by the cell is, the lower the result energy consumption is, in such case, the energy-saving state of the cell is to be adjusted to a state with a lower energy consumption; the larger the PRB usage amount of the cell is, the higher the energy consumption desired by the cell is, in such case, the energy-saving state of the cell is to be adjusted to the state with a higher energy consumption, and the less the PRB usage amount of the cell is, the lower the energy consumption desired by the cell is, in such case, the energy-saving state of the cell is to be adjusted to a state with a lower energy consumption.

As an implementation, the energy-saving state of at least one cell of the current base station may also be adjusted according to a message (e.g., a cell activation request) sent by another base station other than the current base station. As an implementation, a condition for determining whether there is the cell with the energy-saving state to be adjusted in at least one cell of the current base station includes whether a cell activation request sent by another base station is received. That is, the determining whether there is a cell with an energy-saving state to be adjusted in at least one cell of the current base station (operation S110) includes: in response to that a cell activation request message is received, determining that the energy-saving state of a corresponding cell is to be adjusted.

Accordingly, the adjusting the energy-saving state of the cell with the energy-saving state to be adjusted (operation S120) includes: adjusting the energy-saving state of the cell according to energy-saving state adjustment information carried by the cell activation request message, so as to increase or decrease a capacity of the corresponding cell.

As an implementation, the energy-saving state adjustment information carried by the cell activation request message may be adjustment information for adjusting the energy-saving state of the corresponding cell to a state with a higher energy consumption. It should be noted that, it is not excluded that the energy-saving state of the corresponding cell is expected, by the cell activation request, to be adjusted to a state with a lower energy consumption, and accordingly, a capacity of the corresponding cell is reduced to adapt to a reduction of load or predicted load. It should be noted that, the cell activation request message is only an example, other message names (e.g., a cell energy-saving state adjustment message, or a cell energy-saving state update message, etc.) may be used for instructing the target cell to adjust the energy-saving state.

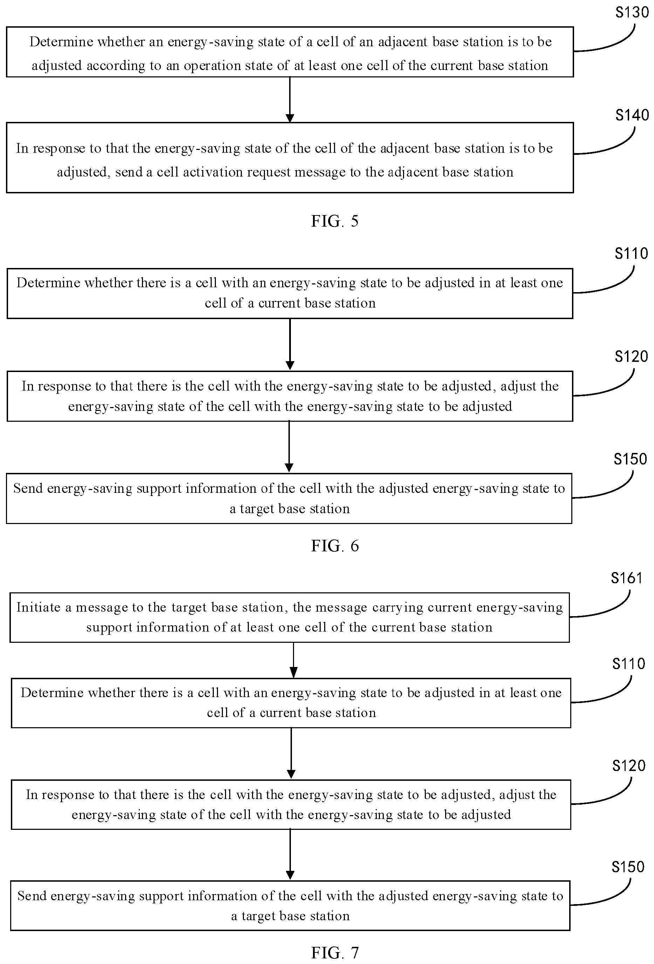

Certainly, the current base station may also determine whether the capacity booster cell of another base station is to be turned on according to the operation state of the cell thereof, so as to perform capacity expansion and increasing on the cell of the current base station. Fig. 5 is a flowchart of other operations included in the base station energy-saving method according to the present disclosure, as shown in Fig. 5, the base station energy-saving method may further following operations S130 and S140.

At operation S130, determining whether an energy-saving state of a capacity booster cell of an adjacent base station (adjacent to the current base station) is to be adjusted according to an operation state of at least one cell of the current base station.

At operation S140, in response to that the energy-saving state of the capacity booster cell of the adjacent base station is to be adjusted, sending a cell activation request message to the adjacent base station.

The cell activation request message includes the energy-saving state adjustment information for at least one cell, the energy-saving state adjustment information is used to indicate a target energy-saving state that a target cell is to enter, the energy-saving state adjustment information includes at least one of followings: an energy-saving shutdown mode associated with a specific target energy-saving state, a target energy-saving state associated with a specific energy-saving shutdown mode, associated information associated with a specific target energy-saving state, and a target energy-saving state corresponding to specific associated information.

As described above, the operation state of the cell includes at least one of: a load of the cell; a predicted load of the cell; a PRB usage amount of the cell; or an energy consumption of the cell.

It should be noted that the current base station is expected to know energy-saving support information of each cell of the adjacent base station, so as to, in the state of desiring capacity expansion, send the cell activation request message to the adjacent base station.

In order to achieve that the current base station knows the energy-saving support information of each cell of the adjacent base station described above, the energy-saving support information of cells of different base stations may be notified between the base stations.

Fig. 6 is a flowchart of an implementation of the base station energy-saving method according to the present disclosure, as shown in Fig. 6, the base station energy-saving method further includes following operation S150.

At operation S150, sending energy-saving support information of a cell with an adjusted energy-saving state to a target base station, the energy-saving support information carrying the adjusted energy-saving state of the cell.

In the present disclosure, any base station communicatively connected to the current base station may be referred to as a target base station. By sending the energy-saving support information of the cell with the adjusted energy-saving state to the target base station, the energy-saving state of the cell of the current base station can be notified to the target base station.

As an implementation, the energy-saving support information further includes at least one piece of following information: the number of antenna channels supported by a cell in a non-energy-saving state; capacity information of a cell in the non-energy-saving state; an energy efficiency target of a cell; a list of energy-saving states supported by a cell; information of energy-saving shutdown modes supported by a cell; a list of energy-saving states of a cell in an energy-saving shutdown mode supported by the cell; and associated information of each energy-saving state of a cell.

As an implementation, the associated information of each energy-saving state of a cell includes at least one piece of following information: capacity information of the cell in each energy-saving state; energy efficiency information of the cell in each energy-saving state; and coverage information of the cell in each energy-saving state.

In the present disclosure, the capacity information of the cell in each energy-saving state includes at least one piece of following information: a maximum number of PRBs, a capacity level, a maximum PRB proportion, a maximum capacity proportion, a maximum number of connected users, a maximum number of antenna channels, and applicable scenarios.

It should be noted that, in a case where uplink and downlink are asymmetric (e.g., a maximum number of uplink PRBs is different from a maximum number of downlink PRBs), the maximum number of PRBs includes the maximum number of uplink PRBs and the maximum number of downlink PRBs. In a case where uplink and downlink are symmetric (e.g., the maximum number of uplink PRBs is the same as the maximum number of downlink PRBs), the maximum number of PRBs may be the maximum number of uplink PRBs or the maximum number of downlink PRBs.

The capacity level of the cell is used to define a capacity of a cell relative to a standard cell, and to compare maximum capacities provided by different cells, the capacity level of the cell may be expressed by a natural number ranging from 0 to 100. In a case where uplink and downlink are symmetric (e.g., a maximum uplink capacity level is the same as a maximum downlink capacity level), the capacity level may be the maximum uplink capacity level or the maximum downlink capacity level; in a case where uplink and downlink are asymmetric (e.g., the maximum uplink capacity level is different form the maximum downlink capacity level), the capacity level may include the maximum uplink capacity level and the maximum downlink capacity level.

In the present disclosure, the maximum PRB proportion may be taken from a range from 0 to 100. In a state where the cell is fully turned off, the PRB proportion of the cell is 0, i.e., there is no available PRB; in a state where the cell is fully turned on (i.e., in the non-energy-saving state), the PRB proportion of the cell is 100, i.e., all PRBs can be used. In the present disclosure, in a case where uplink and downlink are asymmetric (e.g., a maximum uplink PRB proportion and a maximum downlink PRB proportion are not equal), the maximum PRB proportion may include the maximum uplink PRB proportion and the maximum downlink PRB proportion; in a case where uplink and downlink are symmetric (e.g., the maximum uplink PRB proportion is the same as the maximum downlink PRB proportion), the maximum PRB proportion may include the maximum uplink PRB proportion or the maximum downlink PRB proportion.

In the present disclosure, the maximum capacity proportion is a maximum capacity proportion provided in each energy-saving state of the cell by taking into account PRB resources as well as other radio interface resources. In the present disclosure, a number in a range from 0 to 100 may be used for representing the maximum capacity proportion in each energy-saving state of the cell. In a state where the cell is fully turned off, no capacity is provided, and the capacity proportion of the cell is 0; in a state where the cell is fully turned on (i.e., in the non-energy-saving state), the capacity proportion is 100. In a case where uplink and downlink are asymmetric (e.g., a maximum uplink capacity proportion and a maximum downlink capacity proportion are not equal), the maximum capacity proportion may include the maximum uplink capacity proportion and the maximum downlink capacity proportion; in a case where uplink and downlink are symmetric (e.g., the maximum uplink capacity proportion is the same as the maximum downlink capacity proportion), the maximum capacity proportion may include the maximum uplink capacity proportion or the maximum downlink capacity proportion.

The applicable scenarios may refer to whether applicable to a low-load scenario, a medium-load scenario, or a high-load scenario. The user may define the low-load scenario, the medium-load scenario and the high-load scenario according to service conditions.

In the present disclosure, the energy efficiency target is used to indicate a desired energy efficiency of a present cell or the current base station. As an implementation, the energy efficiency target may be obtained by dividing a throughput by the energy consumption. An actual energy efficiency of the cell should not be lower than the energy efficiency target.

In the present disclosure, each energy-saving state of the cell may be stored in a list of energy-saving states. For example, the cell has an energy-saving state 1, an energy-saving state 2, an energy-saving state 3, and the like. Therefore, the list of energy-saving states may store the energy-saving state 1, the energy-saving state 2, the energy-saving state 3, and the like.

The above described is that, after the energy-saving state of the cell is changed, the changed energy-saving state of the cell is notified to the target base station.

In order to enable the target base station to better determine the state of each cell of the current base station, and calculate whether to activate the cell of the target base station according to the state of each cell of the current base station, Fig. 7 is a flowchart of an implementation of the base station energy-saving method according to the present disclosure, as shown in Fig. 7, before sending the energy-saving support information of the cell with the adjusted energy-saving state to the target base station, the base station energy-saving method further includes following operation S161.

At operation S161, initiating a message to the target base station, the message carrying current energy-saving support information of at least one cell of the current base station.

Operation S161 describes directly initiating the message to the target base station to notify the current energy-saving support information of at least one cell of the current base station.

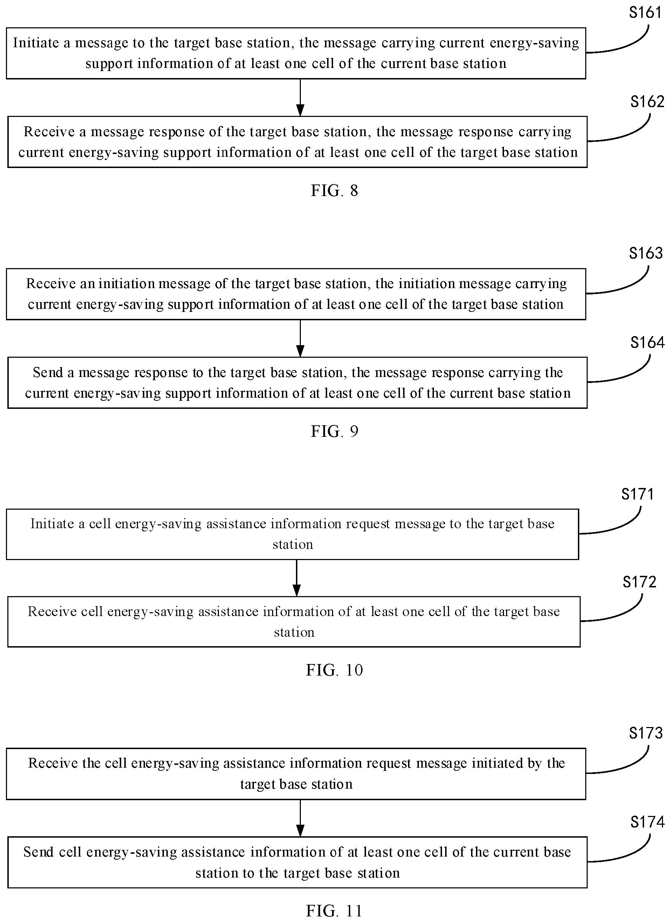

Typically, messages between base stations notify each other. The current base station notifies the energy-saving support information of at least one cell of the current base station to the target base station, and correspondingly, the target base station also notifies the energy-saving support information of at least one cell of the target base station to the current base station. Fig. 8 is a schematic diagram of an implementation of notifying energy-saving support information mutually between base stations in the base station energy-saving method according to the present disclosure, as shown in Fig. 8, the base station energy-saving method may further includes following operation S162.

At operation S162, receiving a message response of the target base station, the message response carries current energy-saving support information of at least one cell of the target base station.

The present disclosure is not limited to thereto, and as an implementation, the message may be initiated to the target base station firstly, and after receiving the response from the target base station, the current energy-saving support information of at least one cell of the current base station may be notified to the target base station. Certainly, after receiving the message initiated by the target base station, the current energy-saving support information of at least one cell of the current base station may be sent to the target base station.

Fig. 9 is a schematic diagram of an implementation of notifying energy-saving support information mutually between base stations in the base station energy-saving method according to the present disclosure, as shown in Fig. 9, before sending the energy-saving support information of the cell with the adjusted energy-saving state to the target base station, the base station energy-saving method may further includes following operations S163 and S164.

At operation S163, receiving an initiation message of the target base station, the initiation message carrying current energy-saving support information of at least one cell of the target base station.

At operation S164, sending a message response to the target base station, the message response carries the current energy-saving support information of at least one cell of the current base station.

In the present disclosure, the message may include an interface setup request message. That is, the energy-saving support information of at least one cell of the current base station is notified during establishing a communication connection with the target base station. The interface may be an X1 interface or an Xn interface.

In the present disclosure, a package format of the energy-saving support information is not particularly limited. As an implementation, the changed energy-saving support information of the cell may be carried in a node configuration update request.

In the present disclosure, in response to that the energy-saving shutdown mode of the cell changes, the changed energy-saving shutdown mode of the cell is carried in the energy-saving support information. For example, in response to that the energy-saving shutdown mode of the cell is adjusted to the symbol shutdown mode, information representing the symbol shutdown mode is carried in the energy-saving support information; in response to that the energy-saving shutdown mode of the cell is adjusted to the channel shutdown mode, information representing the channel shutdown mode is carried in the energy-saving support information; in response to that the energy-saving shutdown mode of the cell is adjusted to the carrier shutdown mode, information representing the carrier shutdown mode is carried in the energy-saving support information; in response to that the energy-saving shutdown mode of the cell is adjusted to a cell full-on mode, information representing the cell full-on mode is carried in the energy-saving support information; in response to that the energy-saving shutdown mode of the cell is adjusted to the cell full-shutdown mode, information representing the cell full-shutdown mode is carried in the energy-saving support information.

In response to that the energy-saving state of the cell is adjusted, the changed energy-saving state information of the cell is carried in the energy-saving support information.

In addition, the energy-saving support information may also carry indication information representing "energy-saving start" or "energy-saving exit" to indicate that the cell enters an energy-saving state or exits the energy-saving state.

In order to enable the target base station to more accurately determine the energy-saving state of the cell of the current base station and more accurately determine the energy-saving state of the cell of the target base station, Fig. 10 is a schematic diagram of an implementation of notifying energy-saving assistance information mutually between base stations in the base station energy-saving method according to the present disclosure, as shown in Fig. 10, the base station energy-saving method further includes following operations S171 and S172.

At operation S171, initiating a cell energy-saving assistance information request message to the target base station.

At operation S172, receiving cell energy-saving assistance information of at least one cell of the target base station.

The cell energy-saving assistance information includes at least one piece of following information: a current energy-saving state of the cell; a current energy-saving shutdown mode of the cell; a current energy efficiency of the cell or the current base station; current coverage information of the cell; information of a current load of the cell; information of a predicted load of the cell; and information of a current network key performance indicator (KPI) of the cell.

As an implementation, the information of the KPI may include at least one of following parameters: a rate of success of switching, a rate of success of the cell switching-in, a rate of success of the cell switching-out, an average throughput of uplink and downlink of the cell, a rate of dropped calls of users, a rate of success of access, a throughput rate of users, a load of the cell, a network load, a utilization rate of radio resources, a network coverage rate.

As an implementation, Fig. 11 is a schematic diagram of an implementation of notifying energy-saving assistance information mutually between base stations in the base station energy-saving method according to the present disclosure, as shown in Fig. 11, the base station energy-saving method further includes following operations S173 and S174.

At operation S173, receiving the cell energy-saving assistance information request message initiated by the target base station.

At operation S174, sending cell energy-saving assistance information of at least one cell of the current base station to the target base station.

In order to enable the target base station to accurately know the energy-saving state information of the cell of the current base station, the base station energy-saving method further includes: in response to that cell energy-saving assistance information of at least one cell of the current base station is changed, sending the changed cell energy-saving assistance information of the cell with the changed cell energy-saving assistance information to the target base station.

As an implementation, the base station energy-saving method further includes: in response to that the cell energy-saving assistance information of at least one cell of the current base station is to be changed, changing the cell energy-saving assistance information of the cell; and sending the changed cell energy-saving assistance information of the cell with the changed cell energy-saving assistance information to the target base station.

In the present disclosure, the current base station may be a coverage base station and the target base station may be a capacity base station. However, the present disclosure is not limited thereto, the current base station may be a capacity base station and the target base station may be a coverage base station.

During a user terminal switches between cells, an energy-saving state of the target cell to which the user desires to switch should also be considered. If the target cell is in the energy-saving state, the capacity of the target cell may be limited. In such case, a cell handover failure may be caused.

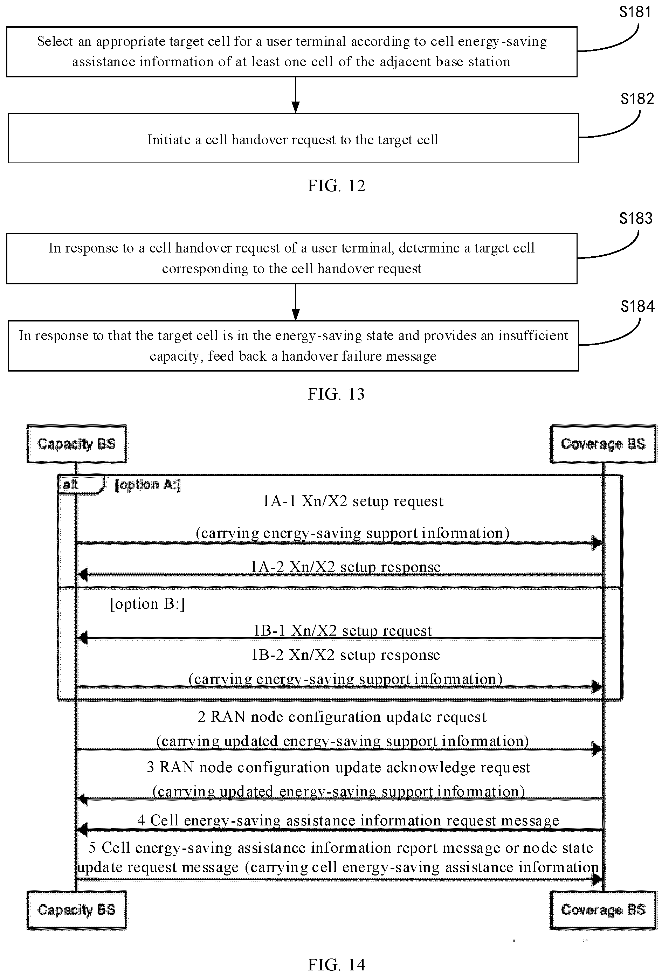

In order to ensure that the user terminal can smoothly switch the cell, Fig. 12 is a schematic diagram of a cell handover flow in the base station energy-saving method according to the present disclosure, as shown in Fig. 12, the base station energy-saving method may further include following operations S181 and S182.

At operation S181, selecting an appropriate target cell for a user terminal according to cell energy-saving assistance information of at least one cell of the adjacent base station.

At operation S182, initiating a cell handover request to the target cell.

In addition, in response to that the cell handover request of the user terminal is received, it is first determined whether a target cell to which the cell handover request indicates to switch has a sufficient capacity. Fig. 13 is a schematic flowchart after receiving a cell handover request in the base station energy-saving method according to the present disclosure, as shown in Fig. 13, the base station energy-saving method further includes following operations S183 and S184.

At operation S183, in response to a cell handover request of a user terminal, determining a target cell corresponding to the cell handover request.

At operation S184, in response to that the target cell is in the energy-saving state (e.g., a capacity thereof is insufficient) and is not capable of accommodating the user terminal, feeding back a handover failure message, the handover failure message carrying information representing that the target cell is in the energy-saving state.

In a second aspect of the present disclosure, there is provided an electronic device including: a memory having a computer executable program stored thereon; at least one processor, the computer executable program, invoked by the at least one processor, causes the at least one processor to implement the base station energy-saving method described above in the present disclosure. In the present disclosure, the electronic device may be a base station, or may be other devices with computing capability.

In a third aspect of the present disclosure, there is provided a computer-readable storage medium having a computer executable program stored thereon, the computer executable program, invoked by a processor, causes the processor to implement the base station energy-saving method in the present disclosure.

### Example 1

Example 1 provides a process of mutually notifying energy-saving support information of cells between two adjacent base stations in an interface setup process of the base stations, Fig. 14 is a schematic diagram of signaling interaction of Example 1 according to the present disclosure, as shown in Fig. 14, the process includes option A, option B, operation 2, operation 3, operation 3, operation 4 and operation 5. Option A includes operations 1A-1 and 1A-2, option B includes operations 1B-1 and 1B-2.

At operation 1A-1, a base station (e.g., a capacity base station) initiates a message to another adjacent base station (e.g., a coverage base station), for example, initiates an interface setup request (e.g., Xn/X2 setup request), the message carrying energy-saving support information of at least one cell, the energy-saving support information of any cell includes at least one of followings: the number of antenna channels supported by the cell in a non-energy-saving state, capacity information of the cell in the non-energy-saving state, an energy efficiency target, a list of energy-saving states supported by the cell, information of energy-saving shutdown modes supported by the cell, a list of energy-saving states for a certain shutdown mode, and associated information of each energy-saving state in the list.

The capacity information of the cell in the non-energy-saving state may include at least one of followings: a maximum number of uplink PRBs and a maximum number of downlink PRBs (e.g., in a case where uplink and downlink are asymmetric, the entry is included), a maximum number of PRBs (e.g., in a case where uplink and downlink are symmetric, the entry is included), capacity level (ranging from 0 to 100, for defining a capacity of a cell relative to a standard cell, and comparing maximum capacities provided by different cells).

The energy efficiency target, indicating a desired energy efficiency of a present cell or a present base station, may be calculated by dividing a throughput by the energy consumption, i.e., an actual energy efficiency should not be lower than the energy efficiency target.

The list of energy-saving states (e.g., energy-saving state 1, energy-saving state 2, energy-saving state 3 and the like) supported by the cell may be configured so that a certain energy-saving state (e.g., energy-saving state 1) is used for representing non-energy-saving state of the cell, i.e., the cell does not start any energy-saving state, the associated information of each energy-saving state may include at least one of followings: capacity information in the energy-saving state, energy efficiency information in the energy-saving state, or coverage information in the energy-saving state. The capacity information in the energy-saving state includes at least one of followings: a maximum number of uplink PRBs and a maximum number of downlink PRBs (e.g., in a case where uplink and downlink are asymmetric, the entry is included), a maximum number of PRBs (e.g., in a case where uplink and downlink are symmetric, the entry is included), capacity level (e.g., in a case where uplink and downlink are symmetric, the entry is included) ranging from 0 to 100 for defining a maximum capacity of a cell relative to a standard cell and comparing maximum capacities provided by different cells, uplink capacity level and downlink capacity level (e.g., in a case where uplink and downlink are asymmetric, the entry is included), a maximum PRB proportion (e.g., in a case where uplink and downlink are symmetric, the entry is included) ranging from 0 to 100, being equal to 0 in response to that the cell is turned off, i.e., there is no available PRB, and being equal to 100 in response to that the cell is in a non-energy-saving state, i.e., all PRBs are available. A maximum uplink PRB proportion and a maximum downlink PRB proportion (e.g., in a case where uplink and downlink are asymmetric, the entry is included), a maximum capacity proportion (e.g., in a case where uplink and downlink are symmetric, the entry is included) ranging from 0 to 100 according to a maximum capacity proportion provided by the cell in the energy-saving state by taking into account PRB resources as well as other radio interface resources, being equal to 0 in response to that the cell is turned off, i.e., no capacity is provided, and being equal to 100 in response to that the cell is in a non-energy-saving state, i.e., all capacity is provided. A maximum uplink capacity proportion and a maximum downlink capacity proportion (e.g., in a case where uplink and downlink are asymmetric, the entry is included), a maximum number of connected users, a maximum number of antenna channels; applicable scenarios (e.g., whether applicable to a low-load scenario, a medium-load scenario, or a high-load scenario).

The information of energy-saving shutdown modes supported by the cell indicates whether to support at least one of the following energy-saving shutdown modes: a channel shutdown mode, a carrier shutdown mode, a symbol shutdown mode, a cell full-shutdown mode.

At operation 1A-2, the base station (may be a coverage base station) sends an interface setup request response message (e.g., Xn/X2 setup response) to a target base station (may be a capacity base station).

The interface setup process of the base stations may include following operations 1B-1 and 1B-2.

At operation 1B-1, the base station (may be a coverage base station) initiates an interface setup request (e.g., Xn/X2 setup request) to another base station (may be a capacity base station).

At operation 1B-2, the base station (may be a coverage base station) receives an interface setup request response message (e.g., Xn/X2 setup response) of another base station (may be a capacity base station), the message carrying the energy-saving support information, and a definition of the energy-saving support information is the same as that in option A.

After the interface setup of the base stations is completed, the process may include following operations 2 to 5.

At operation 2, after the interface is set up and the energy-saving support information of at least one cell of the present base station is changed, the present base station (e.g., a capacity base station) sends a node configuration update request to another base station (e.g., a coverage base station), the node configuration update request carrying changed energy-saving support information to notify the another base station to update corresponding information.

At operation 3, the present base station (e.g., a capacity base station) receives a node configuration update acknowledge message, the message including updated energy-saving support information of at least one cell of a peer base station.

At operation 4, the present base station (e.g., a coverage base station) initiates a cell energy-saving assistance information request message to another base station (e.g., a capacity base station).

At operation 5, the present base station (e.g., a capacity base station) sends a message including the energy-saving assistance information of at least one cell, such as a cell energy-saving assistance information report message or a node update request message, to another base station (e.g., a coverage base station). The energy-saving assistance information may be reported periodically according to a configured period; or if the cell energy-saving assistance information is changed, a report may be actively triggered; or the energy-saving assistance information may be immediately reported after receiving the cell energy-saving assistance information request message.

The energy-saving assistance information of each cell includes at least one of followings: a current energy-saving state of the cell, a current energy-saving shutdown mode of the cell, current energy efficiency of the cell or the current base station, current coverage information of the cell, information of a current load of the cell, information of a predicted load of the cell, or current network KPI information of the cell.

The current energy-saving state of the cell is used for indicating a specific energy-saving state in the list of energy-saving states of the cell.

The current energy-saving shutdown mode of the cell includes, for example, a cell full-shutdown mode, a carrier shutdown mode, a symbol shutdown mode, a channel shutdown mode, or the cell being in the non-energy-saving state.

The information of the current load of the cell may include at least one of: the number of uplink used PRBs and the number of downlink used PRBs, a remaining uplink capacity level and a remaining downlink capacity level, a proportion of uplink used PRBs and a proportion of downlink used PRBs, a proportion of a remaining uplink capacity and a proportion of a remaining downlink capacity, the number of connected users, the number of used antenna channels, an uplink data throughput and an downlink data throughput of the current cell, or the like.

The information of the predicted load of the cell, i.e., information of a predicted load at a certain time or a certain time period in the future, may include at least one of followings: a predicted number of PRBs for uplink and downlink, a predicted capacity level for uplink and downlink, a predicted proportion of PRBs for uplink and downlink, a predicted number of connected users, a predicted uplink data throughput and a predicted downlink data throughput of the cell, or the like.

The current network KPI information of the cell includes at least one of followings: a rate of success of switching, a rate of success of the cell switching-in, a rate of success of the cell switching-out, an average throughput of uplink and downlink of the cell, a rate of dropped calls of users, a rate of success of access, a throughput rate of users, a load of the cell, a network load, a utilization rate of radio resources, a network coverage rate, or the like.

It should be noted that, the energy-saving assistance information of at least one cell is interacted between base stations, which is not only used for determining an adjustment of energy-saving state, but also used for determining a handover of a target cell in a process of connected user mobility, for example, in response to knowing an energy-saving state of each cell of an adjacent base station, a source cell can select an appropriate target cell according to energy-saving states of adjacent cells to initiate a handover request message, so as to improve the rate of success of switching. On the contrary, if the target cell is in the energy-saving state and the capacity thereof is limited, the target cell may feedback a switching reject/failure message including a failure reason of "being in the energy-saving state".

### Example 2

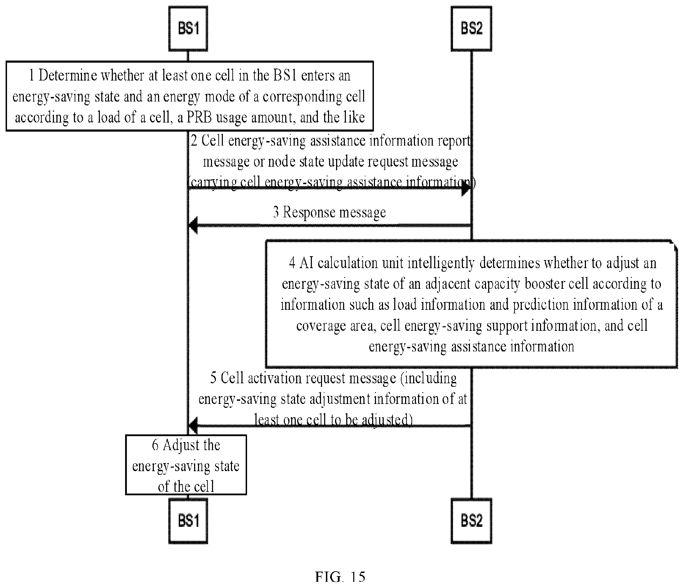

Example 2 provides a process of mutually notifying energy-saving state adjustment information of the cell, Fig. 15 is a schematic diagram of signaling interaction of Example 2 according to the present disclosure, as shown in Fig. 15, the process includes following operations 1 to 6.

At operation 1, a base station BS1 determines whether at least one cell in the BS1 enters an energy-saving state and an energy-saving mode of the corresponding cell according to a load of the cell, a predicted load of the cell, a PRB usage amount, an energy consumption of the cell, and the like. Alternatively, the BS1 determines whether there is at least one cell, in the BS1, with the energy-saving state to be adjusted.

At operation 2, the base station BS1 sets at least one cell in the BS1 to enter the energy-saving state or adjusts the energy-saving state. After the state is adjusted, the BS1 may actively trigger sending a node state update message to a base station BS2, the message including updated cell energy-saving assistance information.

At operation 3, the BS2 receives the node state update message of the BS1 and returns a node state update acknowledge message.

At operation 4, the BS2 intelligently determines whether to adjust an energy-saving state of an adjacent capacity booster cell according to information such as load information of a coverage area, energy-saving support information of the target cell, and received energy-saving support information and energy-saving assistance information of adjacent cells. In response to determining to adjust the energy-saving state of the adjacent capacity booster cell, a message, such as a cell activation request message, including energy-saving state adjustment information for at least one cell, is sent to a base station where the target cell is located, the energy-saving state adjustment information including at least one of followings: energy-saving shutdown mode adjustment information, i.e., the current energy-saving shutdown mode being adjusted to one of a symbol shutdown mode, a carrier shutdown mode, a channel shutdown mode, a cell full-on mode, or a cell full-shutdown mode; an energy-saving start indication or an energy-saving exit indication for indicating whether to enter an energy-saving state or exit the energy-saving state; or an energy-saving state adjustment indication for indicating to adjust the energy-saving state of the cell to a certain energy-saving state in the list of energy-saving states supported by the cell.

At operation 5, after receiving the energy-saving state adjustment information of the cell, the BS1 adjusts the energy-saving state of the corresponding cell according to the received energy-saving state adjustment information of the cell, which includes that if the received information includes the energy-saving shutdown mode adjustment information, the current energy-saving shutdown mode of the cell is adjusted to a shutdown mode, if the received information includes the energy-saving state adjustment indication, the current energy-saving state of the cell is adjusted to a specific energy-saving state according to the corresponding indication, or if the received information includes the energy-saving start indication or the energy-saving exit indication, the energy-saving state is entered or exited according to the corresponding indication.

### Example 3

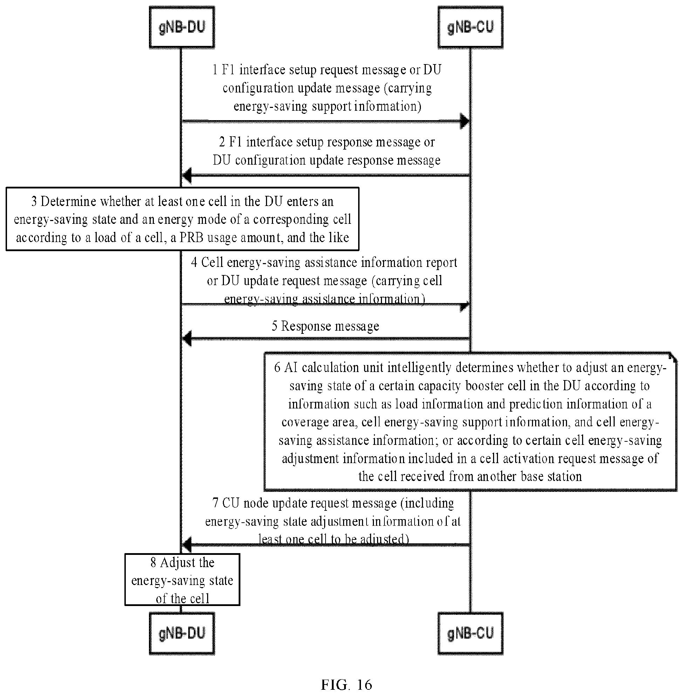

Example 3 provides an implementation based on the base station energy-saving method provided in the present disclosure, Fig. 16 is a schematic diagram of signaling interaction of Example 3 according to the present disclosure, as shown in Fig. 16, the base station energy-saving method includes following operations 1 to 7.

At operation 1, a gNB-Distributed Unit (gNB-DU) sends an F1 interface setup request to a gNB-Centralized Unit (gNB-CU) to setup an F1 interface, the request including energy-saving support information of at least one cell. Alternatively, after the F1 interface is set up and the energy-saving support information is changed, the gNB-DU sends a DU configuration update request to the gNB-CU to notify the gNB-CU to update configurations, the request including updated energy-saving support information of at least one cell, a definition of the energy-saving support information of the cell being the same as that in Example 1.

At operation 2, the gNB-CU returns a response message.

At operation 3, the gNB-DU determines whether at least one cell in the present DU enters the energy-saving state and an energy-saving state of the corresponding cell according to a load of the cell, a PRB usage amount, and the like. Alternatively, the gNB-DU determines whether the energy-saving state of at least one cell in the current DU is to be adjusted.

At operation 4, the gNB-DU sets at least one cells in the DU to enter the energy-saving state or adjusts the energy-saving state. The gNB-DU sends a DU configuration update message or a cell energy-saving assistance information report message to the gNB-CU, the message including updated energy-saving assistance information of at least one cell, and a definition of the energy-saving assistance information of the cell being the same as that in Example 2.

At operation 5, the gNB-CU receives a node state update message (i.e., the DU configuration update message) or the cell energy-saving assistance information report message of the gNB-DU and returns a response message.

At operation 6, the gNB-CU intelligently determines whether to adjust an energy-saving state of a capacity booster cell in the DU according to information such as load information of a coverage area, the energy-saving support information, and the cell energy-saving assistance information, and if the energy-saving state of the capacity booster cell is to be adjusted, sends a CU configuration update message; or sends a CU configuration update message to a DU where a corresponding cell is located according to a cell activation request message received from another base station, the message including energy-saving state adjustment information for at least one cell. A definition of the energy-saving state adjustment information is the same as that in Example 2. Operation 6 may be performed by an AI calculation unit.

At operation 7, after receiving the energy-saving state adjustment information of the cell, the gNB-DU adjusts an energy-saving state of the corresponding cell according to the received energy-saving state adjustment information of the cell. A definition of the energy-saving state adjustment information is the same as that in Example 2.

In the present disclosure, at least one cell of the current base station supports at least one energy-saving state. Therefore, the base station can switch the energy-saving state of the cell as desired.

During the base station saving energy, the energy-saving state of the cell can be adjusted to be in an energy-saving state with a lower energy consumption than that in the current energy-saving state, but the cell is not turned off, so that the medium-load and the low-load of the current cell that still support a small number of service users can occur.

In response to that the capacity of the base station is to be expanded, the energy-saving state of the cell can be adjusted to be in an energy-saving state with a higher energy consumption than that in the current energy-saving state to expand the capacity, so that the capacity of the base station can be expanded, and the base station is still kept in the energy-saving state.

In response to that the number of connected users reaches a peak, the base station may exit from the current energy-saving state and provide service by using the full capacity.

It should be understood by those of ordinary skill in the art that all or some of the operations in the method, the functional modules/components in the apparatus described above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). As known to those skilled in the art, the computer storage medium includes volatile/nonvolatile or removable/non-removable medium used in any method or technology for storing information (such as computer-readable instructions, data structures, program modules and other data). The computer storage medium includes, but is not limited to, RAM, ROM, EEPROM, a flash memory or other memory techniques, CD-ROM, a Digital Video Disk (DVD) or other optical discs, magnetic cassettes, magnetic tapes, magnetic disks or other magnetic storage devices, or any other medium which can be used to store the desired information and can be accessed by a computer. In addition, as known to those skilled in the art, the communication medium generally includes computer-readable instructions, data structures, program modules or other data in a modulated data signal, such as a carrier wave or other transmission mechanism, and may include any information delivery medium.

The present disclosure describes the exemplary embodiments, and although specific terms are employed, they are used and should only be interpreted in a generic and descriptive meaning but not for purposes of a limitation. It is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present disclosure as set forth in the appended claims.

## Claims

1. A base station energy-saving method, comprising:
determining whether there is a cell with an energy-saving state to be adjusted in at least one cell of a current base station, wherein at least one cell of the current base station supports at least one energy-saving state, and an energy consumption of any cell is different under different energy-saving states;
in response to that there is any cell with the energy-saving state to be adjusted, adjusting the energy-saving state of the cell with the energy-saving state to be adjusted.

2. The method according to claim 1, wherein the at least one energy-saving state corresponds to at least one energy-saving shutdown mode one to one, and in different energy-saving shutdown modes, energy-saving modules in energy-saving states in the current base station are different;
the adjusting the energy-saving state of the cell with the energy-saving state to be adjusted comprises at least one of followings:
determining a target energy-saving state of the cell with the energy-saving state to be adjusted from the at least one energy-saving state;
determining an energy-saving shutdown mode corresponding to the target energy-saving state; and
setting a corresponding energy-saving module in the current base station to be in an energy-saving state according to the determined energy-saving shutdown mode.

3. The method according to claim 1, wherein the at least one energy-saving state corresponds to associated information of the at least one energy-saving state one to one;
the adjusting the energy-saving state of the cell with the energy-saving state to be adjusted further comprises at least one of followings:
determining a target energy-saving state of the cell with the energy-saving state to be adjusted from the at least one energy-saving state;
determining associated information of an energy-saving state corresponding to the target energy-saving state; and
turning off or turn on a part of hardware or adjusting a power of a part of hardware in the current base station according to the determined associated information of the energy-saving state.

4. The method according to claim 2, wherein each of the at least one energy-saving shutdown mode is selected from one of following modes:
a channel shutdown mode in which a part of antenna channels of the base station are turned off;
a carrier shutdown mode in which a part of carrier frequencies are turned off;
a symbol shutdown mode in which a power supply of a power amplifier (PA) related to a part of symbols is turned off or the PA related to a part of symbols stops transmitting data;
a cell full-shutdown mode in which modules corresponding to a cell are all turned off.

5. The method according to claim 1, wherein the determining whether there is a cell with an energy-saving state to be adjusted in at least one cell of the current base station comprises:
determining whether there is a cell with an energy-saving state to be adjusted according to an operation state of at least one cell of the current base station.

6. The method according to claim 1, further comprising:
determining whether an energy-saving state of a cell of an adjacent base station is to be adjusted according to an operation state of at least one cell of the current base station;
in response to that the energy-saving state of the cell of the adjacent base station is to be adjusted, sending a cell activation request message to the adjacent base station;
wherein the cell activation request message comprises energy-saving state adjustment information for at least one cell, the energy-saving state adjustment information is configured to indicate a target energy-saving state that a target cell is to enter, the target energy-saving state comprising at least one of followings:
an energy-saving shutdown mode associated with a certain target energy-saving state, a target energy-saving state associated with a certain target energy-saving shutdown mode, associated information associated with a certain target energy-saving state, and a target energy-saving state corresponding to certain associated information.

7. The method according to claim 5 or 6, wherein the operation state of the at least cell comprises at least one of: a load of a cell; a predicted load of a cell; a physical resource block (PRB) usage amount of a cell; or an energy consumption of a cell.

8. The method according to claim 1, wherein the determining whether there is a cell with the energy-saving state to be adjusted in at least one cell of the current base station comprises: in response to that a cell activation request message is received, determining that an energy-saving state of a corresponding cell is to be adjusted;
the adjusting the energy-saving state of the cell with the energy-saving state to be adjusted comprises: adjusting the energy-saving state of the cell according to energy-saving state adjustment information carried by the cell activation request message.

9. The method according to any one of claims 1 to 6 and 8, comprising:
sending energy-saving support information of a cell with an adjusted energy-saving state to a target base station, the energy-saving support information carrying the adjusted energy-saving state of the cell.

10. The method according to claim 9, wherein the energy-saving support information further comprises at least one piece of following information: a total number of antenna channels supported by the cell in a non-energy-saving state; capacity information of the cell in the non-energy-saving state; an energy efficiency target of the cell; a list of energy-saving states supported by the cell; information of energy-saving shutdown modes supported by the cell; a list of energy-saving states of the cell in the energy-saving shutdown mode supported by the cell; and associated information of each energy-saving state of the cell.

11. The method according to claim 10, wherein the associated information of each energy-saving state of the cell comprises at least one piece of following information: capacity information of the cell in each energy-saving state; energy efficiency information of the cell in each energy-saving state; and coverage information of the cell in each energy-saving state.

12. The method according to claim 10, wherein the capacity information of the cell in each energy-saving state comprises at least one piece of following information: a maximum number of PRBs, a capacity level, a maximum PRB proportion, a maximum capacity proportion, a maximum number of connected users, a maximum number of antenna channels, and applicable scenarios.

13. The method according to claim 9, further comprising:
before sending the energy-saving support information of the cell with the adjusted energy-saving state to the target base station, initiating a message to the target base station, the message carrying current energy-saving support information of at least one cell of the current base station.

14. The method according to claim 13, further comprising:
receiving a message response of the target base station, wherein the message response carries current energy-saving support information of at least one cell of the target base station.

15. The method according to claim 13, further comprising:
before sending the energy-saving support information of the cell with the adjusted energy-saving state to the target base station, receiving an initiation message of the target base station, the initiation message carrying current energy-saving support information of at least one cell of the target base station; and
sending a message response to the target base station, wherein the message response carries the current energy-saving support information of at least one cell of the current base station.

16. The method according to claim 13, wherein the message comprises an interface setup request message.

17. The method according to claim 13, wherein a node configuration update request carries adjusted energy-saving support information of the cell.

18. The method according to claim 13, further comprising:
initiating a cell energy-saving assistance information request message to the target base station;
receiving cell energy-saving assistance information of at least one cell of the target base station,
wherein the cell energy-saving assistance information comprises at least one piece of following information: a current energy-saving state of a cell; a current energy-saving shutdown mode of the cell; current energy efficiency of the cell or the current base station; current coverage information of the cell; information of a current load of the cell; information of a current predicted load of the cell; or current network key performance indicator (KPI) information of the cell.

19. The method according to claim 18, further comprising:
receiving the cell energy-saving assistance information request message initiated by the target base station; and
sending cell energy-saving assistance information of at least one cell of the current base station to the target base station.

20. The method according to claim 18, further comprising:
in response to that cell energy-saving assistance information of at least one cell of the current base station is changed, sending the changed cell energy-saving assistance information of the cell with the changed cell energy-saving assistance information to the target base station.

21. The method according to claim 18, further comprising:
in response to that the cell energy-saving assistance information of at least one cell of the current base station is to be changed, changing the cell energy-saving assistance information of the cell; and
sending the changed cell energy-saving assistance information of the cell with the changed cell energy-saving assistance information to the target base station.

22. The method according to claim 20, further comprising:
selecting an appropriate target cell for a user terminal according to cell energy-saving assistance information of at least one cell of an adjacent base station; and
initiating a cell handover request to the target cell.

23. The method according to claim 20, further comprising:
in response to a cell handover request of a user terminal, determining a target cell corresponding to the cell handover request; and
in response to that the target cell is in the energy-saving state and is not capable of accommodating the user terminal, feeding back a handover failure message, wherein the handover failure message carries information representing that the target cell is in the energy-saving state.

24. An electronic device, comprising:
a memory having a computer executable program stored thereon;
at least one processor, the computer executable program, invoked by the at least one processor, causes the at least one processor to implement the base station energy-saving method of any one of claims 1 to 23.

25. A computer-readable storage medium having a computer executable program stored thereon, the computer executable program, invoked by a processor, causes the processor to implement the base station energy-saving method of any one of claims 1 to 23.
